# EUROPÄISCHE PATENTSCHRIFT

(11) **EP 0 388 693 B1**
(45) Veröffentlichungstag und Bekanntmachung des Hinweises auf die Patenterteilung: **26.10.1994**
(21) Anmeldenummer: 90104159.0
(22) Anmeldetag: 03.03.1990
(51) Int. Cl.: B29C 71/02, B29C 35/04, B29D 23/22, B29K 23/00, B29L 23/22

(54) **Verfahren zur Herstellung von Schläuchen mit einer Seele aus vernetzbarem Polyethylen**
Method for fabricating hoses with a core of cross-linkable polyethylene
Procédé pour fabriquer des tuyaux avec un noyau en polyéthylène réticulable

(30) Priorität: 18.03.1989 DE 3909036
(43) Veröffentlichungstag der Anmeldung: 26.09.1990
(73) Patentinhaber: PAGUAG GmbH & Co., 40472 Düsseldorf (DE)
(72) Erfinder: Hüsen, Josef, D-4044 Kaarst 1 (DE)
(74) Vertreter: Stachow, Ernst-Walther, Prof. Dr.

(56) Entgegenhaltungen:
- US-A- 3 255 284
- US-A- 3 752 719

## Beschreibung

Die Erfindung betrifft ein Verfahren zur Herstellung von Schläuchen mit einer Seele aus vernetzbarem Polyethylen, wobei der Schlauch auf einem glatten Metalldorn aufgebaut, danach mit einem äußeren Wickel bandagiert und schließlich in einem Vulkanisierkessel wärmebehandelt wird.

Bei einem bekannten Verfahren der genannten Art wird der Schlauch, der eine etwa 1 bis 2,5mm dicke Polyethylenseele aufweist, in dem Vulkanisierkessel bei erhöhtem Druck im Sattdampf vulkanisiert. Die Wärmebehandlung dauert etwa zwei Stunden.

Schläuche, die nach diesem Verfahren gefertigt werden, können bis maximal 65°C eingesetzt werden. Sie dienen beispielsweise zum Hindurchleiten von Natronlauge, Kalilauge, Ameisensäure, warmem Wasser oder dergleichen.

Für höhere Einsatztemperaturen sind die nach dem bekannten Verfahren hergestellten Schläuche nicht geeignet. Bei höheren Temperaturen würden die Spaltprodukte, die bei der Vulkanisation entstanden und in der Polyethylenseele zurückgeblieben sind, gasen und es würde eine Blasenbildung in der Polyethylenseele auftreten. Die Blasenbildung kann bei weiter ansteigenden Temperaturen derart verlaufen, daß die Blasen aufplatzen und zur Zerstörung des Schlauchaufbaues führen.

Der Erfindung liegt die Aufgabe zugrunde, die Einsatztemperatur von Schläuchen mit einer Seele aus vernetzbarem Polyethylen zu erhöhen, so daß die Schläuche zum Hindurchleiten von heißeren Medien und auch für höher konzentrierte Laugen und Säuren geeignet sind.

Erfindungsgemäß wird diese Aufgabe dadurch gelöst, daß der auf dem Dorn aufgebaute Schlauch mindesten einer zusätzlichen Wärmebehandlung bei etwa Vulkanisationstemperatur unterzogen wird.

Durch die zusätzliche Wärmebehandlung, die wesentlich kürzer gewählt werden kann als die Vulkanisations-Wärmebehandlung, wird ein gezieltes Austreiben der Spaltprodukte aus der Polyethylenseele gefördert. Die Spaltprodukte entweichen dabei entlang dem Dorn.

Vorzugsweise wird der Schlauch zwischen den Wärmebehandlungen auf etwa Umgebungstemperatur abgekühlt. Dadurch entsteht ein gezieltes Konzentrationsgefälle der Spaltprodukte in Richtung auf den Dorn. Beim anschließenden Wiederaufheizen werden die Spaltprodukte erneut gasförmig und es erfolgt ein weiteres Entweichen der Spaltprodukte entlang dem Dorn, so daß die Konzentration der Spaltprodukte in der Polyethylenseele weiter abgebaut wird.

Zweckmäßig erfolgt zunächst die zur Vulkanisation dienende Wärmebehandlung und anschließend die zusätzliche Wärmebehandlung zum Austreiben der Spaltprodukte aus der Schlauchseele.

Obgleich eine einzige Wärmenachbehandlung bereits ein deutlich verbessertes Ergebnis bringt, sollten jedoch mindestens zwei zusätzliche Wärmebehandlungen stattfinden. Dadurch ist es möglich, eine Anhebung der Einsatztemperaturen bis auf 90°C zu erreichen, und zwar auch mit der Möglichkeit zum kurzzeitigen Ausdämpfen bei 130°C. Bei dickeren Polyethylenseelen kann man je nach dem angestrebten Ergebnis auch drei oder vier zusätzliche Wärmebehandlungen durchführen.

Bei der zusätzlichen Wärmebehandlung soll die erreichte Behandlungstemperatur solange gehalten werden, bis sämtliche in dem Schlauch zurückgebliebenen Spaltprodukte wieder vollständig ihren gasförmigen Zustand angenommen haben, damit sie gezielt ausgetrieben werden können.

Für jede zusätzliche Wärmebehandlung reicht in der Regel eine Behandlungsdauer von ca. einer halben Stunde aus. Es ist also für jeden Behandlungsvorgang eine wesentlich kürzere Zeit als für die Vulkanisations-Wärmebehandlung erforderlich.

Bei den Wärmebehandlungen und den anschließenden Abkühlungen lockert sich normalerweise die Bandagierung. Es ist daher zweckmäßig, daß vor jeder Wärmebehandlung erneut bandagiert wird, um einen festen Sitz der Bandage auf dem Schlauchaufbau zu garantieren.

Im folgenden ist ein Beispiel für die Durchführung des Verfahrens beschrieben:
Auf einem bekannten glatten Metalldorn wird ein Schlauch aufgebaut, und zwar beginnend mit einer Seele aus Polyethylen, die in Abhängigkeit vom Schlauchdurchmesser und/oder vom vorgesehenen Anwendungsgebiet des Schlauches eine Stärke von ca. 1 bis 2,5mm aufweist.

Der fertig aufgebaute Schlauch wird dann mit einem Nylonwickel fest bandagiert und anschließend in einem Vulkanisierkessel bei erhöhtem Druck mit Sattdampf behandelt. Die Vulkanisierdauer beträgt etwa zwei Stunden.

Der vulkanisierte Schlauch wird dann aus dem Vulkanisierkessel herausgenommen und auf Umgebungstemperatur abgekühlt. Danach wird die Bandage entfernt; jedoch wird der Schlauch auf dem Dorn belassen. Es erfolgt eine neue Bandagierung wiederum mit einem Nylonwickel, und dann wird der vorbereitete Schlauch wieder in den Vulkanisierkessel eingebracht. Der Schlauch wird im Vulkanisierkessel erneut erwärmt, wobei die bei der Vulkanisation entstandenen und noch nicht ausgetriebenen Spaltprodukte, wie beispielsweise Butanol, Propanol, Azeton, Azetophenon usw. erneut gasförmig werden und in Richtung zum Dorn wandern, wo sie allmählich entweichen können.

Der Schlauch wird etwa eine halbe Stunde auf der Nachbehandlungstemperatur gehalten, die etwa in der Größenordnung der Vulkanisationstemperatur liegt.

Danach wird der Schlauch aus dem Vulkanisationskessel herausgenommen und auf Raumtemperatur abgekühlt. Im Anschluß daran wird erneut der Nylonwickel ausgewechselt und es erfolgt eine weitere Wärmebehandlung in analoger Weise wie die erste Nachbehandlung.

In der Regel kommt man mit zwei Wärmenachbehandlungen aus. Um ein optimales Ergebnis zu erhalten, können aber auch drei oder vier Wärmenachbehandlungen stattfinden.

Aufgrund dieser Wärmenachbehandlungen ist die Polyethylenseele nahezu frei von Spaltprodukten, so daß beim Hindurchleiten von Flüssigkeiten mit Temperaturen höher als 65°C, wie z. B. Wasser sowie Säuren und Laugen mit hohen Konzentrationen es nicht mehr zu Blasenbildungen in der Schlauchseele kommt. Ein entsprechend behandelter Schlauch kann ohne weiteres zum Hindurchleiten von Flüssigkeiten bis zu 90°C eingesetzt werden. Darüber hinaus besteht auch die Möglichkeit zum kurzzeitigen Ausdämpfen bei Temperaturen bis zu 130°C. Beschädigungen der Schlauchseele bzw. des Schlauchaufbaues treten bei entsprechend behandelten Schläuchen nicht mehr auf.

## Patentansprüche

1. Verfahren zur Herstellung von Schläuchen mit einer Seele aus vernetzbarem Polyethylen, wobei der Schlauch auf einem glatten Metalldorn aufgebaut, danach mit einem äußeren Wickel bandagiert und schließlich in einem Vulkanisierkessel wärmebehandelt wird, **dadurch gekennzeichnet**, daß der auf dem Dorn aufgebaute Schlauch mindestens einer zusätzlichen Wärmebehandlung bei etwa Vulkanisationstemperatur unterzogen wird.

2. Verfahren nach Anspruch 1, **dadurch gekennzeichnet**, daß der Schlauch zwischen den Wärmebehandlungen auf etwa Umgebungstemperatur abgekühlt wird.

3. Verfahren nach Anspruch 1 oder 2, **dadurch gekennzeichnet**, daß die zusätzliche Wärmebehandlung im Anschluß an die Vulkanisation durchgeführt wird.

4. Verfahren nach einem der Ansprüche 1 bis 3, **dadurch gekennzeichnet**, daß zwei zusätzliche Wärmebehandlungen stattfinden.

5. Verfahren nach einem der Ansprüche 1 bis 4, **dadurch gekennzeichnet**, daß bei der zusätzlichen Wärmebehandlung die erreichte Behandlungstemperatur mindestens solange gehalten wird, bis sämtliche in dem Schlauch zurückgebliebenen Spaltprodukte wieder vollständig ihren gasförmigen Zustand angenommen haben.

6. Verfahren nach Anspruch 5, **dadurch gekennzeichnet**, daß die zusätzliche Wärmebehandlung je etwa eine halbe Stunde andauert.

7. Verfahren nach einem der Ansprüche 1 bis 6, **dadurch gekennzeichnet**, daß der Schlauch vor jeder Wärmebehandlung gesondert bandagiert wird.

## Claims

1. Method of producing hoses having a core of polyethylene which can be crosslinked, the hose being built on a smooth metal mandrel, subsequently being banded with an outer winding and finally heat-treated in a vulcanising autoclave, characterised in that the hose built up on the mandrel is subjected to at least one additional heat treatment approximately at vulcanisation temperature.

2. Method according to Claim 1, characterised in that the hose is cooled down to approximately ambient temperature between the heat treatments.

3. Method according to Claim 1 or 2, characterised in that the additional heat treatment is performed after vulcanisation.

4. Method according to any one of Claims 1 to 3, characterised in that two additional heat treatments are performed.

5. Method according to any one of Claims 1 to 4, characterised in that, in the additional heat treatment, the operating temperature reached is maintained at least until all the cleavage products remaining in the hose have completely assumed their gaseous state again.

6. Method according to Claim 5, characterised in that the additional heat treatment lasts for approximately half an hour in each case.

7. Method according to any one of Claims 1 to 6, characterised in that the hose is banded separately before each heat treatment.

## Revendications

1. Procédé de fabrication de tuyaux flexibles comportant une âme en polyéthylène réticulable, le tuyau flexible étant monté sur un mandrin métallique lisse, puis garni d'un bandage par enroulement extérieur et enfin traité par la chaleur dans un autoclave de vulcanisation, caractérisé en ce que le tuyau flexible monté sur le mandrin est soumis au moins à un traitement thermique supplémentaire, approximativement à la température de vulcanisation.

2. Procédé selon la revendication 1, caractérisé en ce que le tuyau flexible est refroidi approximativement à la température ambiante entre les traitements thermiques.

3. Procédé selon la revendication 1 ou 2, caractérisé en ce que le traitement thermique supplémentaire est appliqué à la suite de la vulcanisation.

4. Procédé selon l'une quelconque des revendications 1 à 3, caractérisé en ce que deux traitements thermiques supplémentaires sont appliqués.

5. Procédé selon l'une quelconque des revendications 1 à 4, caractérisé en ce qu'au cours du traitement thermique supplémentaire, la température de traitement atteinte est maintenue au moins assez longtemps pour que tous les produits de coupure qui restent dans le tuyau flexible aient repris complètement leur état gazeux.

6. Procédé selon la revendication 5, caractérisé en ce que le traitement thermique supplémentaire dure chaque fois à peu près une demi-heure.

7. Procédé selon l'une quelconque des revendications 1 à 6, caractérisé en ce qu'avant chaque traitement thermique, le tuyau flexible est garni d'un bandage séparé.
